# EUROPEAN PATENT APPLICATION

(11) **EP 4 711 716 A1**
(43) Date of publication of application: **18.03.2026**
(21) Application number: 24200083.4
(22) Date of filing: 12.09.2024
(51) Int. Cl.: G01C 21/30

(54) **A METHOD FOR DETERMINING A CURRENT POSITION OF A VEHICLE ON A NAVIGATION MAP**

(71) Applicant: Zenseact AB, 417 56 Gothenburg (SE)
(72) Inventor: ABDUL RAHUMAN, Sheik Meeran Rasheed, 417 53 Göteborg (SE); JATHAVEDAN, Sameer, 422 53 Hisings Backa (SE); BEAUVISAGE, Axel, 416 52 Göteborg (SE); FU, Junsheng, 449 35 Nödinge (SE); GRANATH, Mats, 423 36 Torslanda (SE)
(74) Representative: Zacco Sweden AB

(57) **Abstract**

The herein disclosed technology relates a method and device for determining a current position of a vehicle on a navigation map. The method (100) comprises: obtaining (5102) a driven ego-trajectory of the vehicle comprising a sequence of consecutive positions of the vehicle, wherein the sequence of consecutive positions comprises at least a last position of the vehicle; obtaining (S104) a set of candidate road segments of the navigation map, wherein the set of candidate road segments are selected based on the last position of the vehicle; processing (S108) the driven trajectory, and each candidate road segment of the set of candidate road segments through an encoding network, to generate a feature representation of the driven trajectory and each of the candidate road segments respectively; applying (S110) a map matching network to the feature representation of the driven trajectory and the feature representation of each candidate road segment, wherein the map matching network is trained to determine a similarity between a driven trajectory and a road segment; determining (5112) a current road segment, of the set of candidate road segments, that the vehicle is currently on, based on the application of the map matching network; and determining (5118) a current position of the vehicle along the current road segment by processing information indicative of the application of the map matching network and the feature representation of the driven ego-trajectory through a position prediction network.

## Description

### TECHNICAL FIELD

The present disclosed technology relates to the field of automated driving systems. In particular, it is related to methods and devices for map matching and vehicle localization

### BACKGROUND

In recent years, advancements in navigation systems and autonomous vehicles have increased the need for accurate map matching and vehicle localization techniques. Map matching refers to the process of aligning a vehicle's estimated position, derived from sensor data such as GPS, with a corresponding location on a digital map. This is an important step for navigation systems to provide reliable directions and for autonomous vehicles to make informed decisions. Accurate localization is critical for the safe and efficient operation of autonomous vehicles, enabling precise navigation and real-time decision-making. Traditional map matching methods often rely on positioning sensors, such as the Global Navigation Satellite System (GNSS), in order to track the vehicle's position on a map.

However, these existing systems are prone to inaccuracies, especially due to noise in environments with limited satellite visibility, such as urban canyons, tunnels, or dense forested areas. In these situations, GNSS data alone can be insufficient to provide the required accuracy for map matching, leading to significant localization errors. Moreover, complex road networks in such environments means that only a small error in positioning can lead to significant deviations from the intended path.

To mitigate these challenges, sensor fusion techniques have been developed, combining data from GNSS with other sensors like cameras, LiDAR, and radar to improve localization accuracy. While these approaches can achieve better results, they are computationally expensive and require high-definition map data, which can limit their practical applications, particularly for real-time processing in embedded systems or low-cost navigation units. Additionally, challenges arise in areas where the high-definition map data itself is outdated or incomplete, which can further compromise the reliability of map matching. The present invention addresses the above challenges by proposing an improved method for map matching and vehicle localization.

### SUMMARY

The herein disclosed technology seeks to mitigate, alleviate or eliminate one or more of the above-identified deficiencies and disadvantages in the prior art to address various problems relating to map matching and vehicle localization. More specifically, it is proposed a deep-learning based approach for determining a current position of a vehicle on a navigation map, such as a Standard Definition (SD) map. The solution proposed by the inventors addresses key questions such as how to best encode the map data and sensor data, particularly GNSS and inertial navigation system (INS) sensors, for deep learning, and train learning-based models to perform accurate map matching and vehicle localization along the correct road segment.

Deep learning has been found to offer potential in addressing the challenges associated with SD-like map-based localization. Traditional algorithms for localization often struggle with the variability and lower resolution inherent in SD maps, particularly in complex urban environments where the road geometry can be intricate. Additionally, classical models may face limitations when integrating data from multiple sensors, as they typically rely on predefined rules and heuristics, making it challenging to accommodate additional sensor inputs without extensive re-engineering. In contrast, deep learning models can be more adept at handling and fusing data from multiple sensors, as they are designed to learn complex correlations and patterns directly from the data. This adaptability suggests that deep learning models may be better suited to leveraging sensor data for improving localization accuracy.

Various aspects and embodiments of the disclosed technology are defined below and in the accompanying independent and dependent claims.

According to a first aspect, there is provided a computer-implemented method for determining a current position of a vehicle on a navigation map. The method comprises obtaining a driven ego-trajectory of the vehicle comprising a sequence of consecutive positions of the vehicle. The sequence of consecutive positions comprises at least a last position of the vehicle. The method further comprises obtaining a set of candidate road segments of the navigation map. The set of candidate road segments are selected based on the last position of the vehicle. The method further comprises processing the driven trajectory, and each candidate road segment of the set of candidate road segments through an encoding network, to generate a feature representation of the driven trajectory and each of the candidate road segments respectively. The method further comprises applying a map matching network to the feature representation of the driven trajectory and the feature representation of each candidate road segment. The map matching network being trained to determine a similarity between a driven trajectory and a road segment. The method further comprises determining a current road segment, of the set of candidate road segments, that the vehicle is currently on, based on the application of the map matching network. The method further comprises determining a current position of the vehicle along the current road segment by processing information indicative of the application of the map matching network and the feature representation of the driven ego-trajectory through a position prediction network. With this aspect of the disclosed technology, similar advantages and preferred features are present as in the other aspects.

According to a second aspect, there is provided a computer program product comprising instructions which when the program is executed by a computing device, causes the computing device to carry out the method according to any embodiment of the first aspect. According to an alternative embodiment of the second aspect, there is provided a (non-transitory) computer-readable storage medium. The non-transitory computer-readable storage medium stores one or more programs configured to be executed by one or more processors of a processing system, the one or more programs comprising instructions for performing the method according to any embodiment of the first aspect. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a third aspect, there is provided a computing device for determining a current position of a vehicle on a navigation map. The computing device comprising control circuitry. The control circuitry is configured to obtain a driven ego-trajectory of the vehicle comprising a sequence of consecutive positions of the vehicle. The sequence of consecutive positions comprises at least a last position of the vehicle. The control circuitry is further configured to obtain a set of candidate road segments of the navigation map. The set of candidate road segments are selected based on the last position of the vehicle. The control circuitry is further configured to process the driven trajectory, and each candidate road segment of the set of candidate road segments through an encoding network, to generate a feature representation of the driven trajectory and each of the candidate road segments respectively. The control circuitry is further configured to apply a map matching network to the feature representation of the driven trajectory and the feature representation of each candidate road segment. The map matching network being trained to determine a similarity between a driven trajectory and a road segment. The control circuitry is further configured to determine a current road segment, of the set of candidate road segments, that the vehicle is currently on, based on the application of the map matching network. The control circuitry is further configured to determine a current position of the vehicle along the current road segment by processing information indicative of the application of the map matching network and the feature representation of the driven ego-trajectory through a position prediction network. With this aspect of the disclosed technology, similar advantages and preferred features are present as in the other aspects.

According to a fourth aspect, there is provided a vehicle comprising the computing device according to any embodiment of the third aspect. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that it can achieve precise map matching and vehicle localization in a computationally efficient manner.

An advantage of some embodiments is that map matching and vehicle localization can be done with relatively low-resolution map data (e.g. SD maps), rather than high-resolution map data. These low-resolution maps are in this context advantageous in that they are more available and easier to keep up-to-date. In addition, they can be less computationally heavy to process, which is advantageous when performed online (i.e. at the vehicle) in real-time. Moreover, SD maps for instance, have much greater coverage than HD maps, and are typically already available in the vehicle, thus coming with no additional cost.

An advantage of some embodiments is that it offers a more reliable and robust approach, than merely relying on GNSS data.

An advantage of some embodiments is that it can help with longitudinal speed control, as by knowing where along a road segment the vehicle is, the speed can be adapted to match a speed limit of an upcoming road segment.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Figure 1 is a schematic flowchart representation of a method, in accordance with some embodiments;
Figure 2 is a schematic illustration of a computing device, in accordance with some embodiments;
Figure 3 is a schematic illustration of a vehicle, in accordance with some embodiments;
Figure 4 illustrates, by way of example, a portion of a navigation map;
Figure 5A and 5B illustrates, by way of example, a model architecture, in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first signal and the second element are both elements, but they are not the same element.

As used herein, the wording "one or more of" a set of elements (as in "one or more of A, Band C" or "at least one of A, B and C") is to be interpreted as either a conjunctive or disjunctive logic. Put differently, it may refer either to all elements, one element or combination of two or more elements of a set of elements. For example, the wording "one or more of A, B and C" may be interpreted as A or B or C, A and B and C, A and B, B and C, or A and C.

Throughout the present disclosure, reference is made to networks (may also be referred to as models), such as encoding network, map matching network, and position prediction network. By this, it is herein meant any form of machine learning algorithm, such as deep learning models, neural networks, or the like, which is able to learn and adapt from input data and subsequently make predictions, decisions, or classifications based on new data.

Deployment of a machine learning model typically involves a training phase where the model learns from labeled or unlabeled training data to achieve accurate predictions during the subsequent inference phase. The training data (and input data during inference) may e.g. be an image, or sequence of images, LIDAR data (i.e. a point cloud), radar data, or any other form of data. Furthermore, the training/input data may comprise a combination or fusion of one or more different data types. Additionally, or in combination, it may comprise a combination or fusion of two or more instances of the same data types, such as two or more images from different cameras.

The machine learning model may be implemented in some embodiments using publicly available suitable software development machine learning code elements, for example, such as those which are available in Pytorch, TensorFlow, and Keras, or in any other suitable software development platform, in any manner known to be suitable to someone of ordinary skill in the art.

### Overview

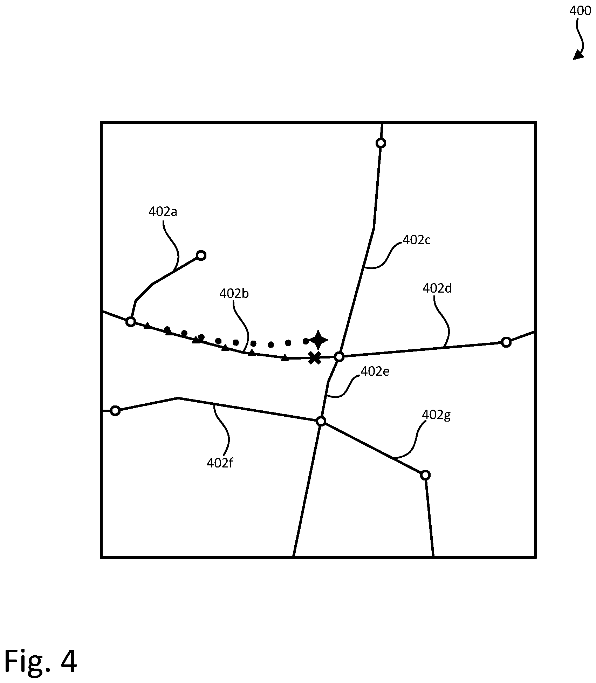

As explained in the foregoing, the disclosed technology relates to map matching and vehicle localization. Map matching herein refers to the process of associating the vehicle's position with a specific road segment on the map. By way of example, Fig. 4 illustrates a portion of a navigation map 400 comprising a set of road segments. The road segment (may also be referred to as "map link") can be seen as the building blocks of that represents the different roads or paths within the map. Put differently, the road segments (or links) together form a road network. These links can be used for navigational purposes, as they define the possible routes that the vehicle can take. In the illustrated example, the road segments are represented by lines the lines denoted 402a-g, connecting a respective pair of nodes (illustrated by circles).

A road segment may be represented by a set of coordinates and/or vectors, defining the layout of the road segment. The road segment may further have an associated identifier. The identifier may be unique for every road segment of the navigation map. The road segment may further have an associated direction of travel. Moreover, a road segment may be understood as a part of a road. A road from A to B may be divided into one or more road segments. A road segment may be in the range from a few meters up to hundreds or thousands of meters.

Once the correct link (i.e. the current road segment on which the vehicle is located) has been identified, the next challenge is to determining the vehicle's specific location (or position) within (or along) that link. This is throughout the present disclosure referred to as vehicle localization. This process can involve calculating the precise position of the vehicle relative to the link's start point. Factors such as speed of the vehicle, road curvature, and the direction of traffic in the link can all affect this process. Accurate prediction of the vehicle's position within a link is important for ensuring that the vehicle follows the correct path and makes appropriate navigational decisions.

Maps used in autonomous vehicle localization vary significantly in detail, accuracy, and purpose. The most commonly used maps are High Definition (HD) maps and Standard Definition (SD) maps. High Definition Maps have relatively high detailed level and contain centimeter-level accuracy information, including precise lane boundaries, road curvature, traffic signs, and other essential data for controlling the vehicle within its lane. These maps are highly accurate because it is mainly used for controlling the vehicle in real-time. In contrast, Standard Definition Maps offer a lower level of detail, typically focusing on broader road features, such as road geometry, number of lanes, speed limit, traffic direction, and other road-level data. Because of the global level of information stored in the SD maps, they have large coverage which can be used for localization in the context of planning, which is done by retrieving road-level features of what is ahead. Thus, HD and SD maps serve complementary roles in autonomous vehicle systems, with HD maps providing the precise, real-time control needed for accurate in-lane positioning, while SD maps offer essential road-level data that aids in broader planning and decision-making tasks.

The navigation (or navigational) map as used herein, refers to a lower level of detail map, such as SD maps. In other words, the navigation map may be an SD map. It is however to be understood that other maps of similar level of detail are applicable as well. In general, the navigation map may be understood as a map describing the road network. The road network can e.g. be represented by vectors, or a set of lines and/or points. The navigation map may also be referred to as road network map, or vector map.

Navigation maps for this purpose have several advantages over higher-detail maps, such as HD maps. For example, they can more easily be kept up-to-date, and are less computationally heavy to process, which is importance since the vehicle localization has to be done in real-time, and preferably at the edge (i.e. by the ego-vehicle itself). The disclosed technology therefore has the objective of achieving accurate map matching and vehicle localization by leveraging the global-level information provided by navigation maps, such as SD maps. This is achieved by employing deep-learning techniques.

### Embodiments

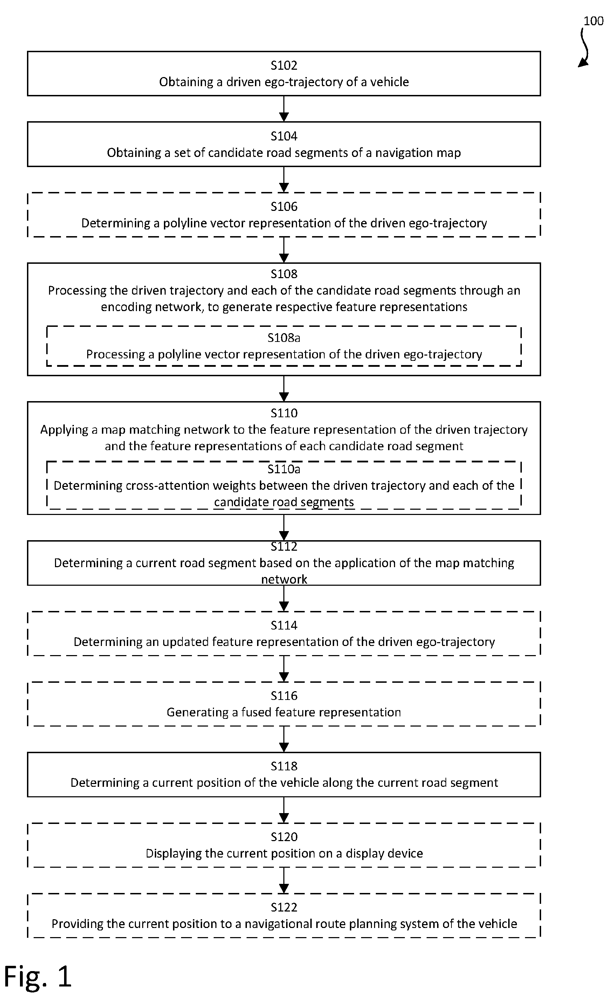

Figure 1 is a schematic flowchart representation of a computer-implemented method 100 for determining a current position of a vehicle on a navigation map. In some embodiments, it is a method 100 for SD map localization of the vehicle.

Below, the different steps of the method 100 are described in more detail. Even though illustrated in a specific order, the steps of the method 100 may be performed in any suitable order as well as multiple times. Thus, although Fig. 1 may show a specific order of method steps, the order of the steps may differ from what is depicted. In addition, two or more steps may be performed concurrently or with partial concurrence. For example, the steps denoted S120 and S122 can be performed independently of each other. Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 100 will become apparent from the present disclosure. The herein mentioned and described embodiments are only given as examples and should not be limiting to the present invention. Other solutions, uses, objectives, and functions within the scope of the invention as claimed below described patent claims should be apparent for the person skilled in the art.

It should be appreciated that the method 100 of Fig. 1 comprises some steps which are illustrated as boxes in solid lines and some steps which are illustrated in dashed lines. The steps which are shown in solid lines are steps which are comprised in the broadest example embodiment of the method 100. The steps which are comprised in dashed lines are examples of a number of optional steps which may form part of a number of alternative embodiments. It should be appreciated that the optional steps need not be performed in order. Furthermore, it should be appreciated that not all of the steps need to be performed. The example steps may be performed in any order and in any combination.

The method 100 comprises obtaining S102 a driven ego-trajectory of the vehicle (or driven trajectory of the (ego) vehicle) comprising a sequence of consecutive positions of the vehicle. Put differently, the driven trajectory may comprise a plurality of positions of the vehicle, as recorded over a sequence of time instances.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc.

The positions of the vehicle may be geographical positions of the ego-vehicle, as recorded e.g. by a GNSS system of the vehicle. In other words, it may be a set (two or more) of coordinates in a global coordinate system. More specifically, the sequence of consecutive positions may be a series of GNSS points, recorded during the last 10, 20, or 30 seconds for example. In other words, the driven trajectory can be seen as a historical ego-trajectory. It is to be noted that the time frame for recording the driven trajectory of the ego-vehicle may vary, depending on a specific realization, and are not limited to the examples above. The sequence of consecutive positions comprises at least a last position of the vehicle. Put differently, the sequence of consecutive positions may comprise a last known location of the ego-vehicle, i.e. a believed current position of the vehicle.

In some embodiments, the driven ego-trajectory of the vehicle further comprises motion data of the ego-vehicle along the driven trajectory. The motion data may comprise an acceleration, a velocity and/or a heading of the vehicle along the driven trajectory. The motion data may be collected by an inertial navigation system.

The method 100 further comprises obtaining S104 a set of candidate road segments of the navigation map. A candidate road segment is herein to be understood as a road segment, of the navigation map, that is a candidate of being the road segment currently travelled by the vehicle. In other words, the set of candidate road segments can be seen as a subset of a number of road segments making up the navigation map, and which are road segments that the vehicle could potentially be located on.

The set of candidate road segments are selected based on the last position of the vehicle. More specifically, the set of candidate road segments may be selected based on a distance from the last position of the vehicle. For example, the set of candidate road segments may be selected as the road segments of the navigation map that are located within a defined distance from the last position of the vehicle. For example, the set of candidate road segments may be selected as those road segments that are within 300×300 meters from the last position of the vehicle.

In some embodiments, the method 100 further comprise determining S106 a polyline vector representation of the driven ego-trajectory. Moreover, the candidate road segments may be represented as polyline vector representations as well.

A polyline is defined as a series of connected line segments formed by a sequence of ordered points (nodes) in a two-dimensional or three-dimensional space. Each node is defined by its spatial coordinates, and the polyline represents the continuous path connecting these points in a specified order. The polyline vector representation can thus be represented by a set of geographic coordinates (x,y), where each coordinate (x,y) corresponds to a point in the polyline. The coordinates may be transformed from a global coordinate system to a local coordinate system of the vehicle. In another example, the polyline can be represented by a sequence of vectors. Each vector connecting a pair of neighboring points in the polyline. Moreover, each vector may comprise a starting point and an ending point. Each vector may further comprise additional attributes, such as information indicative of the motion data associated with the vehicle along said vector. Thus, the polyline vector representation may further represent the motion data associated with the vehicle at each position along the driven trajectory. This enriches the polyline vector representation with additional information, useful for the subsequent map matching and vehicle localization. This additional information can be encoded together with the spatial information about the ego-trajectory. The additional information may further comprise road features, such as road type or speed limit.

The method 100 further comprises processing S108 the driven trajectory, and each candidate road segment of the set of candidate road segments through an encoding network, to generate a feature representation of the driven trajectory and each of the candidate road segments respectively.

In some embodiments, the driven trajectory and each candidate road segment are processed through the same encoding network. The driven trajectory and each candidate road segment may be processed individually, one-by-one or in parallel. It is however to be noted that different encoding networks may be used as well, for encoding the driven trajectory and the set of candidate road segments.

The feature representation (may also be referred to as vector representation, or embedding) may herein be construed as a representation of data (in this case of the driven trajectory, or of a candidate road segment) in the form of a dense, fixed-dimensional vector. Such feature representations are commonly used to convert high-dimensional or complex data into a more meaningful and structured form, that is easier for machine learning models to process and analyze. These representations can capture important features of the data in a way that allows similar data points to be close to each other in the vector space.

Processing S108 the driven trajectory through the encoding network may comprise processing S108a the polyline vector representation of the driven ego-trajectory, and of each candidate road segment. The encoding network may further serve the purpose of transforming the polyline vectors representation of varying length (depending on the length of the driven trajectory, and of the different candidate road segments) to a common format with fixed length.

The encoding network may be a graph neural network based encoding network. With this architecture, the topological information of the polyline can be utilized to represent it as a graph. Each polyline can be treated as a graph where the polyline edge vectors act as graph nodes. Using these nodes, a fully connected graph (i.e. each node has an edge to every other node in an adjacency matrix) can be constructed. More specifically, each vector of a polyline can form a node in the graph representing said polyline. Then, the information of all nodes in the graph can be aggregated to generate an embedded vector (i.e. a feature representation) which encompasses the information of the polyline.

The encoding network may be a transformer based encoding network. With this architecture, the transformer can treat the polyline as a sequence of vectors. Moreover, the transformer performs positional encoding and attention across all vectors and updated their information. Then, the transformer aggregates the information across all the vectors by max pooling to get one single embedded vector, forming the feature representation.

The method 100 further comprises applying S110 a map matching network to the feature representation of the driven trajectory and the feature representation of each candidate road segment. Put differently, the feature representation of the driven trajectory, and the feature representations of the set of candidate road segments may be fed and processed by the map matching network.

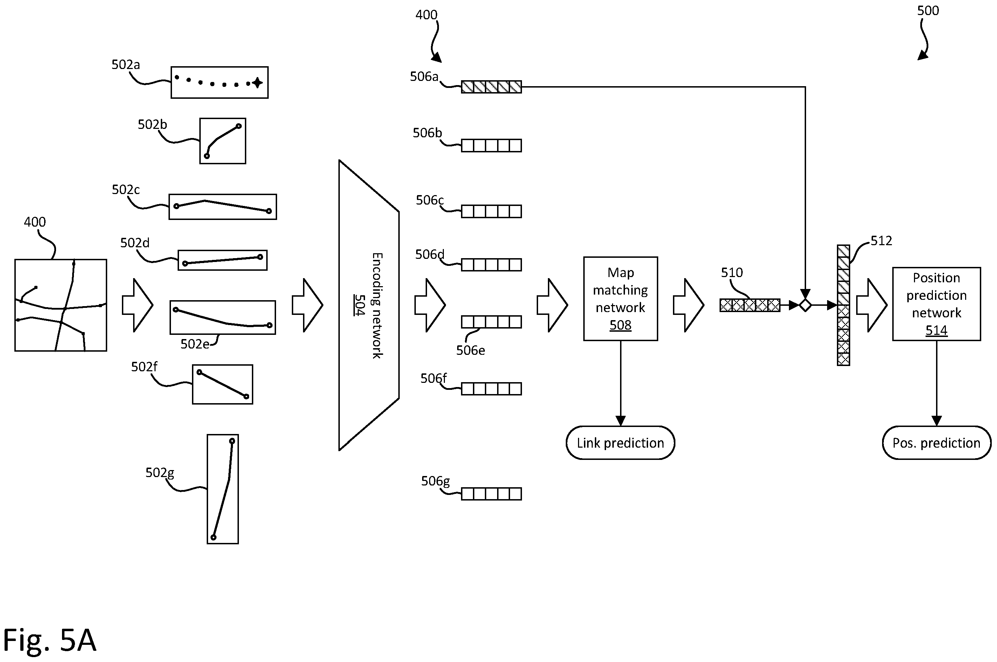

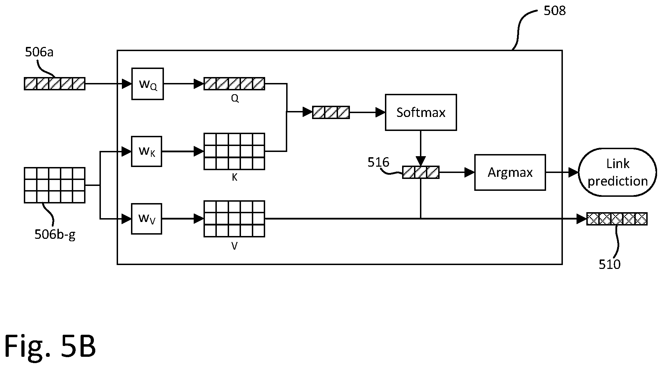

The map matching network is a network trained to determine a similarity between a driven trajectory and a road segment. In other words, the map matching network may be trained to output a similarity score between the driven trajectory, and a candidate road segment. In some embodiments, the map matching network employs a cross-attention network to classify the correct map link based on the available map information (i.e. the set of candidate road segments). In other words, the map matching network may be a cross-attention based network. Applying S110 the map matching network may comprise determining S110a cross-attention weights between the driven trajectory and each of the candidate road segments. The map matching network may further refine the driven ego-trajectory using context vectors, as will be further elaborated upon below. The map matching network will be further explained below, in connection with Fig. 5A and 5B.

The method 100 further comprises determining S112 a current road segment, of the set of candidate road segments, that the vehicle is currently on, based on the application of the map matching network. Put differently, the current road segment may be determined S112 based on the output (or results) of the application of the map matching network. For example, the current road segment may be determined S112 as the candidate road segment having the highest similarity with the driven trajectory, as determined by the map matching network. In some embodiments, the current road segment is determined S112 as the candidate road segment having the highest cross-attention weight.

In some embodiments, the method 100 further comprises determining S114 an updated feature representation of the driven ego-trajectory based on a cross-attention applied between the feature representation of the driven ego-trajectory and the feature representation of each of the candidate road segments. The updated feature representation can be determined by the map matching network. The updated feature representation can be seen as a refinement of the original feature representation of the driven trajectory, which considers the results of the application of the map matching network. Put differently, the feature representation of the driven trajectory can be updated by integrating map link information obtained from the map matching network. The method 100 then further comprises generating S116 a fused feature representation by combining the updated feature representation of the driven ego-trajectory with the feature representation of the driven ego-trajectory as generated by the encoding network (i.e. the "original" feature representation of the driven ego-trajectory). The fused feature representation can be generated by concatenating the updated feature representation of the driven ego-trajectory with the feature representation of the driven ego-trajectory as generated by the encoding network. As another example, the fused feature representation can be generated by a learned approach, e.g. by applying a neural network trained to fuse the updated feature representation of the driven ego-trajectory with the feature representation of the driven ego-trajectory as generated by the encoding network.

The method 100 further comprises determining S118 a current position of the vehicle along the current road segment by processing information indicative of the application of the map matching network and the feature representation of the driven ego-trajectory through a position prediction network. The position prediction network (may also be referred to as point prediction network) may thus be trained to output a predicted position, based on information indicative of an output of the map matching network as input. In some embodiments, the information indicative of the application of the map matched network may comprise the fused feature representation. In other words, the fused feature representation may be fed as input to the position prediction network.

The map matching network and the position prediction network may be trained together in an end-to-end manner. Put differently, the map matching network and the position prediction network may be trained together, so as to learn both tasks in a complementary way, helping to improve the performance of both networks.

The method 100 may further comprise displaying S120 the current position on a display device by rendering the current position data as a graphical representation on the display device. More specifically, the current position may be displayed on a graphical representation of the navigation map.

The method 100 may further comprise providing S122 the current position to a navigational route planning system of the vehicle. The navigational route planning system may e.g. be part of an automated driving system of the vehicle.

Executable instructions for performing these functions are, optionally, included in a non-transitory computer-readable storage medium or other computer program product configured for execution by one or more processors.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

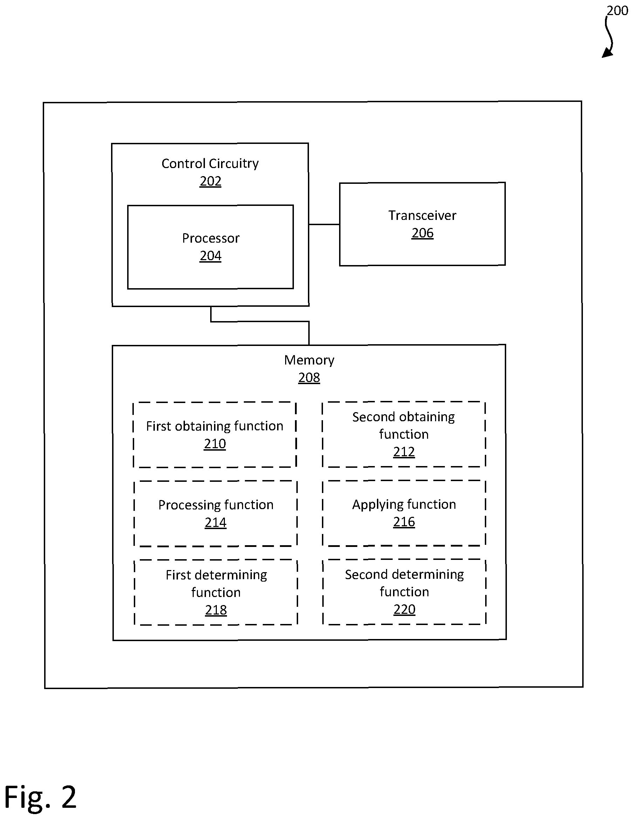

Figure 2 is a schematic illustration of a computing device 200, in accordance with some embodiments of the disclosed technology. The computing device 200 may be configured to perform the method 100 as described in connection with Fig. 1. Thus, the computing device 200 may be a computing device 200 for determining a current position of a vehicle on a navigation map.

The computing device 200 as described herein, refers to a computer system, or any device or general computing system configured to perform various functions. Even though the computing device 200 is herein illustrated as one device, the computing device 200 may be a distributed computing system, formed by a number of different devices.

The computing device 200 comprises control circuitry 202. The control circuitry 202 may physically comprise one single circuitry device. Alternatively, the control circuitry 202 may be distributed over several circuitry devices.

As shown in the example of Fig. 2, the computing device 200 may further comprise a transceiver 206 and a memory 208. The control circuitry 202 being communicatively connected to the transceiver 206 and the memory 208. The control circuitry 202 may comprise a data bus, and the control circuitry 202 may communicate with the transceiver 206 and/or the memory 208 via the data bus.

The control circuitry 202 may be configured to carry out overall control of functions and operations of the computing device 200. The control circuitry 202 may include a processor 204, such as a central processing unit (CPU), microcontroller, or microprocessor. The processor 204 may be configured to execute program code stored in the memory 208, in order to carry out functions and operations of the computing device 200. The control circuitry 202 is configured to perform the steps of the method 100 as described above in connection with Fig. 1. The steps may be implemented in one or more functions stored in the memory 208.

The transceiver 206 is configured to enable the computing device 200 to communicate with other entities, such as vehicles or other devices. The transceiver 206 may both transmit data from and receive data to the computing device 200.

The memory 208 may be a non-transitory computer-readable storage medium. The memory 208 may be one or more of a buffer, a flash memory, a hard drive, a removable media, a volatile memory, a non-volatile memory, a random access memory (RAM), or another suitable device. In a typical arrangement, the memory 208 may include a non-volatile memory for long-term data storage and a volatile memory that functions as system memory for the computing device 200. The memory 208 may exchange data with the circuitry 202 over the data bus. Accompanying control lines and an address bus between the memory 208 and the circuitry 202 also may be present.

Functions and operations of the computing device 200 may be implemented in the form of executable logic routines (e.g., lines of code, software programs, etc.) that are stored on a non-transitory computer readable recording medium (e.g., the memory 208) of the computing device 200 and are executed by the circuitry 202 (e.g., using the processor 204). Put differently, when it is stated that the circuitry 202 is configured to execute a specific function, the processor 204 of the circuitry 202 may be configured execute program code portions stored on the memory 208, wherein the stored program code portions correspond to the specific function. Furthermore, the functions and operations of the circuitry 202 may be a stand-alone software application or form a part of a software application that carries out additional tasks related to the circuitry 202. The described functions and operations may be considered a method that the corresponding device is configured to carry out, such as the method 100 discussed above in connection with Fig. 1. In addition, while the described functions and operations may be implemented in software, such functionality may as well be carried out via dedicated hardware or firmware, or some combination of one or more of hardware, firmware, and software. In the following, the function and operations of the computing device 200 is described.

The control circuitry 202 is configured to obtain a driven ego-trajectory of the vehicle comprising a sequence of consecutive positions of the vehicle. The sequence of consecutive positions comprises at least a last position of the vehicle. This may be performed e.g. by execution of a first obtaining function 210.

The control circuitry 202 is further configured to obtain a set of candidate road segments of the navigation map. The set of candidate road segments being selected based on the last position of the vehicle. This may be performed e.g. by execution of a second obtaining function 212. It is to be noted that the first and second obtaining function may be implemented as two separate functions, or as one common obtaining function.

The control circuitry 202 is further configured to process the driven trajectory, and each candidate road segment of the set of candidate road segments through an encoding network, to generate a feature representation of the driven trajectory and each of the candidate road segments respectively. This may be performed e.g. by execution of a processing function 214.

The control circuitry 202 is further configured to apply a map matching network to the feature representation of the driven trajectory and the feature representation of each candidate road segment. The map matching network being trained to determine a similarity between a driven trajectory and a road segment. This may be performed e.g. by execution of an applying function 216.

The control circuitry 202 is further configured to determine a current road segment, of the set of candidate road segments, that the vehicle is currently on, based on the application of the map matching network. This may be performed e.g. by execution of a first determining function 218.

The control circuitry 202 is further configured to determine a current position of the vehicle along the current road segment by processing information indicative of the application of the map matching network and the feature representation of the driven ego-trajectory through a position prediction network. This may be performed e.g. by execution of a second determining function 220. It is to be noted that the first and second determining function may be implemented as two separate functions, or as one common determining function.

It should be noted that the principles, features, aspects, and advantages of the method 100 as described above in connection with Fig. 1, are applicable also to the computing device 200 as described herein. In order to avoid undue repetition, reference is made to the above. Hence, the control circuitry may be configured to perform any of the steps as described as part of the method 100.

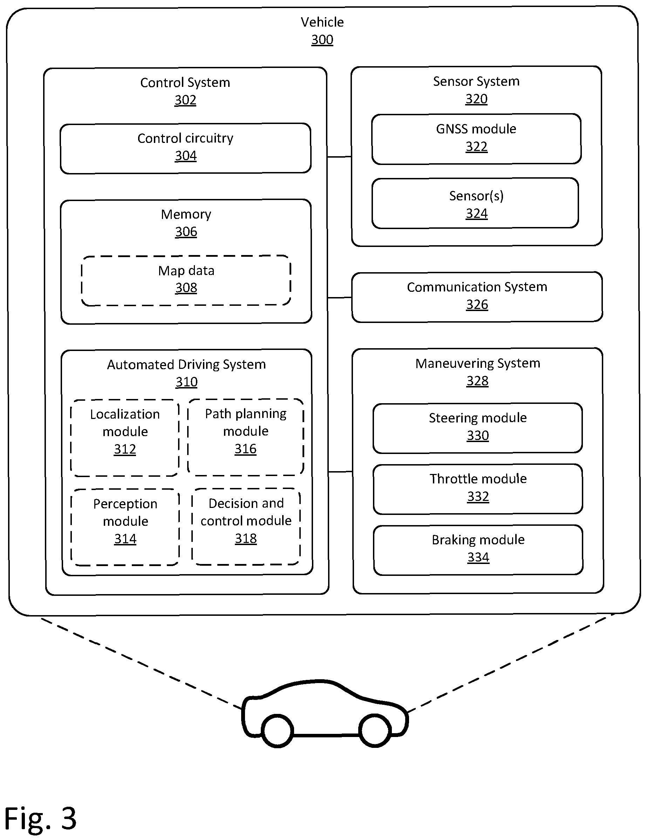

Figure 3 is a schematic illustration of a vehicle 300 in accordance with some embodiments. The vehicle 300 may be equipped with an Automated Driving System (ADS) 310. As used herein, a "vehicle" is any form of motorized transport. For example, the vehicle 300 may be any road vehicle such as a car (as illustrated herein), a motorcycle, a (cargo) truck, a bus, a smart bicycle, etc.

In the present context, an Automated Driving System (ADS) refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, radar, lidar, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. ADAS features often serve as building blocks for ADS. Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that distinction between ADAS and AD lies in the level of autonomy and control. ADAS systems are designed to aid and support drivers, while an ADS aims to take full control of the vehicle without requiring constant human oversight. AD accordingly aims for higher levels of autonomy (such as Levels 4 and 5, according to the SAE International standard), where the vehicle can operate independently in most or all driving scenarios without human intervention. As mentioned in the foregoing, the term "ADS" in used herein as an umbrella term encompassing both ADAS and AD. An ADS function or ADS feature may in the present context be understood as a specific function or feature of the entire ADS stack, such as e.g., a Highway Pilot feature, a Traffic-Jam pilot feature, a path planning feature, and so forth.

The vehicle 300 comprises a number of elements which can be commonly found in autonomous or semi-autonomous vehicles. It will be understood that the vehicle 300 can have any combination of the various elements shown in Fig. 3. Moreover, the vehicle 300 may comprise further elements than those shown in Fig. 3. While the various elements are herein shown as located inside the vehicle 300, one or more of the elements can be located externally to the vehicle 300. Further, even though the various elements are herein depicted in a certain arrangement, the various elements may also be implemented in different arrangements, as readily understood by the skilled person. It should be further noted that the various elements may be communicatively connected to each other in any suitable way. The vehicle 300 of Fig. 3 should be seen merely as an illustrative example, as the elements of the vehicle 300 can be realized in several different ways.

The vehicle 300 comprises a control system 302. The control system 302 is configured to carry out overall control of functions and operations of the vehicle 300. The control system 302 comprises control circuitry 304 and a memory 306. The control circuitry 302 may physically comprise one single circuitry device. Alternatively, the control circuitry 302 may be distributed over several circuitry devices. As an example, the control system 302 may share its control circuitry 304 with other parts of the vehicle. The control circuitry 302 may comprise one or more processors, such as a central processing unit (CPU), microcontroller, or microprocessor. The one or more processors may be configured to execute program code stored in the memory 306, in order to carry out functions and operations of the vehicle 300. The processor(s) may be or include any number of hardware components for conducting data or signal processing or for executing computer code stored in the memory 306. In some embodiments, the control circuitry 304, or some functions thereof, may be implemented on one or more so-called system-on-a-chips (SoC). As an example, the ADS 310 may be implemented on a SoC. The memory 306 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 306 may include database components, object code components, script components, or any other type of information structure for supporting the various activities of the present description.

In the illustrated example, the memory 306 further stores map data 308. The map data 308 may for instance be used by the ADS 310 of the vehicle 300 in order to perform autonomous functions of the vehicle 300. The map data 308 may comprise high-definition (HD) map data and/or standard-definition (SD) map data. It is contemplated that the memory 308, even though illustrated as a separate element from the ADS 310, may be provided as an integral element of the ADS 310. In other words, according to some embodiments, any distributed or local memory device may be utilized in the realization of the present inventive concept. Similarly, the control circuitry 304 may be distributed e.g. such that one or more processors of the control circuitry 304 is provided as integral elements of the ADS 310 or any other system of the vehicle 300. In other words, according to an exemplary embodiment, any distributed or local control circuitry device may be utilized in the realization of the disclosed technology.

The vehicle 300 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 300. The sensor system 320 may further comprise one or more sensors 324. The one or more sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 300.

The vehicle 300 further comprises a communication system 326. The communication system 326 is configured to communicate with external units, such as other vehicles (i.e. via vehicle-to-vehicle (V2V) communication protocols), remote servers (e.g. cloud servers as the devices described above in connection with Fig. 3 and 4), databases or other external devices, i.e. vehicle-to-infrastructure (V2I) or vehicle-to-everything (V2X) communication protocols. The communication system 326 may communicate using one or more communication technologies. The communication system 326 may comprise one or more antennas. Cellular communication technologies may be used for long-range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short-range communication technologies may be used such as Wireless Local Area (LAN), e.g. IEEE 802.11 based solutions, for communicating with other vehicles in the vicinity of the vehicle 300 or with local infrastructure elements. ETSI is working on cellular standards for vehicle communication and for instance 5G is considered as a suitable solution due to the low latency and efficient handling of high bandwidths and communication channels.

The communication system 326 may further provide the possibility to send output to a remote location (e.g. remote server, operator or control center) by means of the one or more antennas. Moreover, the communication system 326 may be further configured to allow the various elements of the vehicle 300 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 300 further comprises a maneuvering system 320. The maneuvering system 328 is configured to control the maneuvering of the vehicle 300. The maneuvering system 328 comprises a steering module 330 configured to control the heading of the vehicle 300. The maneuvering system 328 further comprises a throttle module 332 configured to control actuation of the throttle of the vehicle 300. The maneuvering system 328 further comprises a braking module 334 configured to control actuation of the brakes of the vehicle 300. The various modules of the steering system 328 may receive manual input from a driver of the vehicle 300 (i.e. from a steering wheel, a gas pedal and a brake pedal respectively). However, the maneuvering system 328 may be communicatively connected to the ADS 310 of the vehicle, to receive instructions on how the various modules should act. Thus, the ADS 310 can control the maneuvering of the vehicle 300.

As stated above, the vehicle 300 comprises an ADS 310. The ADS 310 may be part of the control system 302 of the vehicle. The ADS 310 is configured to carry out the functions and operations of the autonomous functions of the vehicle 300. The ADS 310 can comprise a number of modules, where each module is tasked with different functions of the ADS 310.

The ADS 310 may comprise a localization module 312 or localization block/system. The localization module 312 is configured to determine and/or monitor a geographical position and heading of the vehicle 300, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS.

The device 200 as described above, may be provided e.g. as part of the localization module 312. Hence, the vehicle 300 is configured to perform the steps of the method 100 described above.

The ADS 310 may further comprise a perception module 314 or perception block/system. The perception module 314 may refer to any commonly known module and/or functionality, e.g. comprised in one or more electronic control modules and/or nodes of the vehicle 300, adapted and/or configured to interpret sensory data - relevant for driving of the vehicle 300 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320. The production model, as referred to above, may be provided as part of the ADS 310, or more specifically as part of the perception module 314.

The localization module 312 and/or the perception module 314 may be communicatively connected to the sensor system 320 in order to receive sensor data from the sensor system 320. The localization module 312 and/or the perception module 314 may further transmit control instructions to the sensor system 320.

The ADS may further comprise a path planning module 316. The path planning module 316 is configured to determine a planned path of the vehicle 300 based on a perception and location of the vehicle as determined by the perception module 314 and the localization module 312 respectively. A planned path determined by the path planning module 316 may be sent to the maneuvering system 328 for execution. As an example, the determined current position of the vehicle on the navigation map may be transmitted to the path planning module 316.

The ADS may further comprise a decision and control module 318. The decision and control module 318 is configured to perform the control and make decisions of the ADS 310. For example, the decision and control module 318 may decide on whether the planned path determined by the path-planning module 316 should be executed or not. The decision and control module 318 may be further configured to detect any deviating behavior of the vehicle, such as deviations from the planned path, or expected trajectory of the path planning module 316. This includes both evasive maneuvers performed by the ADS 310 and by a driver of the vehicle.

It should be understood that parts of the described solution may be implemented either in the vehicle 300, in a system located external to the vehicle, or in a combination of internal and external to the vehicle; for instance, in a server in communication with the vehicle, a so-called cloud solution. The different features and principles of the embodiments may be combined in other combinations than those described. Further, the elements of the vehicle 300 (i.e. the systems and modules) may be implemented in different combinations than those described herein. As an example, the process of training the encoding network, the map matching network and the position prediction network may be performed in the server. Once trained, the networks may be deployed in the vehicle.

Figure 4 illustrates, by way of example, a portion of a navigation map 400. As explained in the forgoing, the navigation map comprises a set of road segments 402a-g. Further shown in Fig. 4 is a driven trajectory of the vehicle, herein shown by a dotted line. Each dot represents a position of a sequence of consecutive positions of the vehicle as captured e.g. by a GNSS sensor. Moreover, the driven trajectory comprises a last position of the vehicle, herein indicated by a star shape.

The actual trajectory of the vehicle (corresponding to the actual road segment travelled by the vehicle) is herein shown by a sequence of triangles. The actual position along this trajectory is indicated by a cross. These may be used as ground truths during a training process of the map matching network and position prediction network.

As seen in Fig. 4, the recorded driven trajectory may deviate from the actual trajectory. This may for instance be caused by noise or other errors in the GNSS data. The herein disclosed technology aims to solve this problem through the use of deep-learning techniques.

Figures 5A and 5B illustrates, by way of example, a model architecture, in accordance with some embodiments. Seen differently, Figs. 5A and 5B illustrates a processing pipeline of the herein disclosed technology.

As described above, a driven trajectory 502a of the vehicle is obtained. Moreover, a portion of the navigation map 400 comprising a set of candidate route segments 502b-g around the last position of the vehicle can be obtained. The driven trajectory 502a and each of the candidate route segments 502b-g are then processed through an encoding network 504.

The encoding network is configured to generate corresponding feature representations 506a-g for the driven trajectory 502a and each of the candidate route segments 502b-g.

The feature representations 506a-g of the driven trajectory and the candidate route segments may then be fed to the map matching network 508. The map matching network 508 being trained to determine a similarity between the driven trajectory and each of the candidate route segments.

In some embodiments, and as shown in Fig. 5B, the map matching network 508 employs a cross-attention network to classify the correct road segment (or map link) based on the available information. Fig. 5B shows, by way of example, a cross-attention scheme. The feature representation 506a of the ego-trajectory is processed as the query, and the feature representations 506b-g of the candidate road segments are processed as keys and values. From this, attention weights 516 can be determined. The attention weights 516 can be used to determine the current road segment, i.e. the map link matching the driven ego-trajectory. The attention weights 516 can be further used to determine an updated feature representation 510 of the driven ego-trajectory, as explained in the foregoing. The updated feature representation 510 incorporates the attention weights 516 (or scores) to enrich the feature representation of the driven ego-trajectory. This weight together the feature representations of the different candidate road segments, by prioritizing information from the most relevant segments.

Turning back to Fig. 5A, the updated feature representation can be fused with the original feature representation 506a of the driven ego-trajectory, to form a fused feature representation 512. The fused feature representation 512 can then be fed to the position prediction network 514 (or point prediction network).

The position prediction network 514 may be configured to predict a current position of the vehicle along the current road segment, by processing information indicative of the application of the map matching network (e.g. the fused feature representation 512). In other words, the position prediction network 514 outputs a position of the vehicle as a point.

In some embodiments, the position prediction network 514 comprises a Multi-Layer Perceptron (MLP) with an output layer containing two neurons. The position prediction network 514 is then designed to take as input a vector formed by fusing (e.g. by concatenating) the feature representation 506a of the driven ego-trajectory with the updated feature representation 510. Using this input, the position prediction network 514 can be trained to output a 2D point (x, y), representing the vehicle's localized position, with the last point of the ego trajectory serving as the origin. During training, the loss function can incorporate two components, (1) a distance between the predicted point and a ground truth point, and (2) a distance between the predicted point and its nearest point on a ground truth map link. In this way, the predicted point can be constrained to both the exact ground truth point, and secondarily, the ground truth map link.

In more detail, the MLP can take in the vector (which is obtained from the map matching network 508), and further extracts relevant information from it by linearly combining the features of the vector and applying non-linearity with activation functions. In this way it converts a vector of fixed dimension to another vector of dimension 2, i.e., the predicted position coordinates.

As explained in the foregoing, the map matching network 508 and the position prediction network 514 can be trained using a joint optimization approach. The joint optimization approach combines map matching and point prediction tasks.

For the map matching component, the network's outputs can be processed through a softmax activation function, and the resulting probabilities can then be used to compute a Negative Log Likelihood Loss (NLLLoss). This loss measures the network's performance in predicting the correct map link by comparing the predicted probabilities against the ground truth.

For the point prediction component, two distinct losses can be computed to guide the model's learning process. As an example, the first loss can measure the Euclidean distance between the predicted point and the ground truth point. To calculate this, the squared differences between the predicted and ground truth coordinates are summed, and the square root of this sum gives the Euclidean distance.

Additionally, the second loss can evaluate the distance between the predicted point and its closest point on the ground truth map link. This metric ensures that the predicted point is not only close to the ground truth point but also appropriately aligned with the correct map link. By using both losses, the predicted point can be constrained to be near the ground truth point while also ensuring it is well-positioned relative to the correct map link.

The disclosed technology has been presented above with reference to specific embodiments. However, other embodiments than the above described are possible and within the scope of the invention. Different method steps than those described above, performing the methods by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the methods according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

It should be noted that any reference signs do not limit the scope of the claims, that the invention may be at least in part implemented by means of both hardware and software, and that the same item of hardware may represent several "means" or "units".

## Claims

1. A computer-implemented method (100) for determining a current position of a vehicle on a navigation map, the method (100) comprises:
obtaining (S102) a driven ego-trajectory of the vehicle comprising a sequence of consecutive positions of the vehicle, wherein the sequence of consecutive positions comprises at least a last position of the vehicle;
obtaining (S104) a set of candidate road segments of the navigation map, wherein the set of candidate road segments are selected based on the last position of the vehicle;
processing (S108) the driven trajectory, and each candidate road segment of the set of candidate road segments through an encoding network, to generate a feature representation of the driven trajectory and each of the candidate road segments respectively;
applying (S110) a map matching network to the feature representation of the driven trajectory and the feature representation of each candidate road segment, wherein the map matching network is trained to determine a similarity between a driven trajectory and a road segment;
determining (S112) a current road segment, of the set of candidate road segments, that the vehicle is currently on, based on the application of the map matching network; and
determining (S118) a current position of the vehicle along the current road segment by processing information indicative of the application of the map matching network and the feature representation of the driven ego-trajectory through a position prediction network.

2. The method (100) according to claim 1, further comprising determining (S106) a polyline vector representation of the driven ego-trajectory, and
wherein processing (S108) the driven trajectory through the encoding network comprises processing (S108a) the polyline vector representation of the driven ego-trajectory.

3. The method (100) according to claim 1 or 2, wherein the candidate road segments are represented as polyline vector representations.

4. The method (100) according to any one of the claims 1 to 3, wherein the map matching network is a cross-attention based network.

5. The method (100) according to claim 4, wherein applying (S110) the map matching network comprises determining (S110a) cross-attention weights between the driven trajectory and each of the candidate road segments.

6. The method (100) according to claim 5, wherein the current road segment is determined (S112) as the candidate road segment having the highest cross-attention weight.

7. The method (100) according to any one of the claims 1 to 6, further comprising:
determining (S114) an updated feature representation of the driven ego-trajectory based on a cross-attention applied between the feature representation of the driven ego-trajectory and the feature representation of each of the candidate road segments; and
generating (S116) a fused feature representation by combining the updated feature representation of the driven ego-trajectory with the feature representation of the driven ego-trajectory as generated by the encoding network;
wherein the information indicative of the application of the map matched network comprises the fused feature representation.

8. The method (100) according to any one of the claims 1 to 7, further comprising displaying (S120) the current position on a display device by rendering the current position data as a graphical representation on the display device.

9. The method (100) according to any one of the claims 1 to 8, wherein the driven ego-trajectory further comprises motion data associated with the vehicle at each position of the sequence of consecutive positions.

10. The method (100) according to any one of the claims 1 to 9, wherein the encoding network is a graph neural network based encoding network.

11. The method (100) according to any one of the claims 1 to 9, wherein the encoding network is a transformer based encoding network.

12. The method (100) according to any one of the claims 1 to 11, wherein the map matching network and the position prediction network are trained together in an end-to-end manner.

13. A computer program product comprising instructions, which when the program is executed by a computing device, causes the computing device to carry out the method (100) according to any one of the claims 1 to 12.

14. A computing device (200) for determining a current position of a vehicle on a navigation map, the computing device (200) comprising control circuitry (202) configured to:
obtain a driven ego-trajectory of the vehicle comprising a sequence of consecutive positions of the vehicle, wherein the sequence of consecutive positions comprises at least a last position of the vehicle;
obtain a set of candidate road segments of the navigation map, wherein the set of candidate road segments are selected based on the last position of the vehicle;
process the driven trajectory, and each candidate road segment of the set of candidate road segments through an encoding network, to generate a feature representation of the driven trajectory and each of the candidate road segments respectively;
apply a map matching network to the feature representation of the driven trajectory and the feature representation of each candidate road segment, wherein the map matching network is trained to determine a similarity between a driven trajectory and a road segment;
determine a current road segment, of the set of candidate road segments, that the vehicle is currently on, based on the application of the map matching network; and
determine a current position of the vehicle along the current road segment by processing information indicative of the application of the map matching network and the feature representation of the driven ego-trajectory through a position prediction network.

15. A vehicle (300) comprising the computing device (200) according to claim 14.
